# EUROPEAN PATENT SPECIFICATION

(11) **EP 2 965 172 B1**
(45) Date of publication and mention of the grant of the patent: **01.06.2022**
(21) Application number: 14723500.6
(22) Date of filing: 24.02.2014
(51) Int. Cl.: G06F 3/01, G03B 5/06, H04N 13/395

(54) **PROCESS FOR MAKING AN AUDIO-VISUAL INTERFACE**
VERFAHREN ZUR HERSTELLUNG EINER AUDIOVISUELLEN SCHNITTSTELLE
PROCESSUS DE RÉALISATION D'UNE INTERFACE AUDIOVISUELLE

(30) Priority: 05.03.2013 IT PE20130004
(43) Date of publication of application: 13.01.2016
(73) Proprietor: Blue Cinema TV s.r.l., 00153 Roma (IT)
(72) Inventor: BALDACCI, Daniele, I-65015 Montesilvano (PE) (IT)
(74) Representative: Garavelli, Paolo
(86) International application number: PCT/IT2014/000048
(87) International publication number: WO 2014/136131

(56) References cited:
- WO-A1-2009/155926
- WO-A2-98/10584
- US-A1- 2011 007 079
- US-A1- 2011 304 632
- US-B1- 7 844 467

## Description

The present invention refers to a process for making an audio-visual interface.

The most modern prior art in terms of interface provides for voice- or gesture-type interaction modes (Apple Iphone Siri, last-generation video game consoles) whose communication protocol is based on the ratio between a human user and an apparatus (telephone, computer, console).

The recent patents filed by Samsung and Apple and other companies operating in the field of electronics and telephony, involve the human perception in a more and more complete way (recognition of the eye movement).

The great change in the media evolution therefore comes from the new modes for interacting with people, for example from different user interface forms.

US-B1-7 844 467 and US-A1-2011/007079 disclose processes according to the prior art.

Object of the present invention is providing a process which proposes as result a simple and natural interface which can be used by everybody and, at the same time, is most involving: an interactive real human being (filmed and not generated with computer graphics), reproduced with a three-dimensional effect to increase the visual involvement.

Such interface allows passing from a third generation of electronic apparatuses and computers which are invisible, cannot even be seen, and are naturally adapted to the ways in which one works and lives his everyday life.

There are multiple potential uses and applications of the process: as interface of new-generation electronic apparatuses and computers, in which always more and more interactivity is required with a user; as info points in museums, showrooms, stations, airports, towns, parks, etc. where, differently from the past, multi-sensor and interactive aspects are preferred in order to increse the viewer's involvement, who, seeing the human interface, will be able to access to information through a simple talk.

The invention allows the chance of making a visual interface in the language of signs (LIS) towards apparatuses, and a simultaneous translator from verbal language into LIS.

Such process brings about a result that, in addition to having a value per se, is a paradigmatic change in the history of relationships between user and apparatus.

The extreme easiness of such relationship (with simple "talk") makes the users of any type of apparatus extended also to all those that have difficulties in interfacing with modern technologies, in addition to handicapped people.

The above and other objects and advantages of the invention, as will appear from the following description, are obtained with a process for making an audio-visual interface as claimed in claim 1. Preferred embodiments and non-trivial variations of the present invention are the subject matter of the dependent claims.

It is intended that all enclosed claims are an integral part of the present description.

The present invention will be better described by some preferred embodiments thereof, provided as a non-limiting example, with reference to the enclosed drawings, in which:
- Figure 1 is a schematic view of the operating environment in which the process according to the present invention operates;

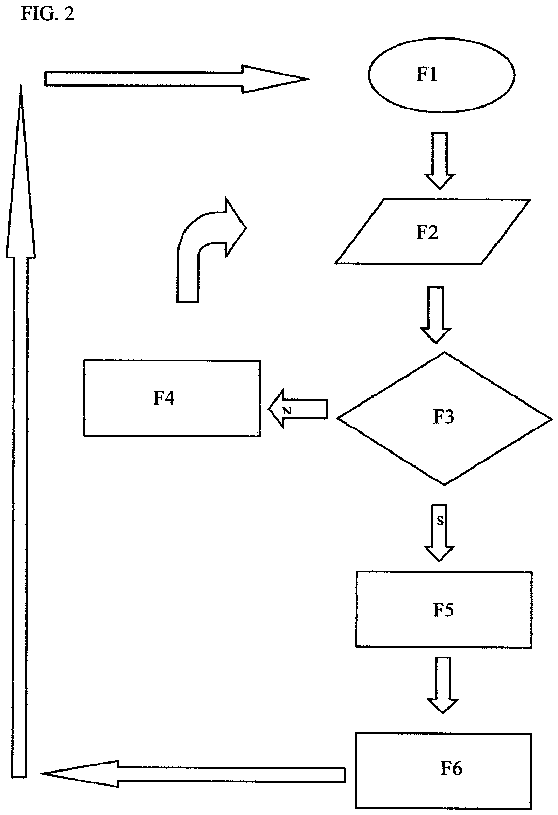

- Figures 2 and 3 are flow diagrams of the main steps of the process of the present invention;
- Figures 4 to 7 are some possible results of the process of the present invention; and
- Figure 8 shows the final image which is obtained with the process of the present invention.

With reference to the Figures, a preferred embodiment of the process for making an audio-visual interface of the present invention is shown and described.

The inventive process for making an audio-visual interface is developed in three steps:
FIRST STEP: interactivity analysis.
SECOND STEP: image acquisition
THIRD STEP: reproduction through optical (or television) system
FIRST STEP: INTERACTIVITY ANALYSIS

The process provides for the use of an optical apparatus which reproduces with three-dimensional effect the human presence (described in the THIRD STEP), equipped with a sensor/controller 3 (with its related software) capable of voice recognising, able to interpret the human language.

The interpretation of the human language allows identifying the information semantics.

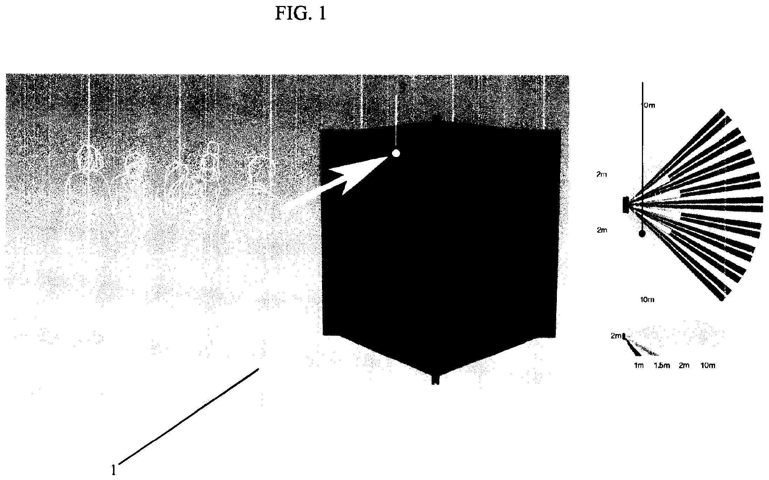

The system is able to trigger the appropriate event depending on the received voice command, and communicates with a computer through an interface to connect the external devices, such as a USB port, a parallel port, a standard serial port (Figure 1).

The reproduction system can access a series of "n" actions by the reproduced subject through a logic programming. A volumetric sensibility (with suitable sensor 3) allows the system to perceive the presence, absence and related status change (arrival, good-bye), in addition to a series of movements by the observer/user 1. Consequent actions by the system can be made and programmed. For example, upon programming, the reproduction of the answer segment: "The book is used to fetch information", could be associated with the questions "what is the book?", "what is the book used for?", or simply "book" and many others.

Once having outlined the specific interactive project, visual and audio shootings are made (SECOND STEP).

The chosen actor will recite all provided segments (ACTIONS), in addition to a whole series of non-verbal actions (IDLE, PRE-IDLE and BRIDGE) which will be used to provide the interface with such presence effect due to a simulation of the human behaviour during the dialogue.

The visual sequences to shoot will be segmented according to an interactivity logic to obtain the sensation of talking with a human being.

The logic sequences are divided into four main categories (to which the sub-categories for more complex projects are added):
1) IDLE sequence (indifference status in which the interface "lives" waiting for a status change command);
2) PRE-IDLE sequence (a behaviour preluding to the action);
3) BRIDGE sequence (an image transition which helps to give visual continuity to the interface between the IDLE/PRE-IDLE status and the ACTION status)
4) ACTION sequence (in which the interface performs or makes the action performed)

For example, when the interface does not perform actions, it will have to be in an indifference (IDLE) status, for example looking around or whistling. When a question is inserted, its attention status changes (PRE-IDLE) looking at a user with its face, in order to then analyse the performed question and proceed with the related answer or programmed action (ACTION).

An invitation action to repeat the question could be provided for non-programmed questions.

Statuses detected by the volumetric sensor 3 will also be analysed and the interface behaviour, reaction or action will be programmed for interacting with the utente 1 according to the specific interactive project. Figure 1 also graphically shows the audio-volumetric sensibility of the microphone and of the sensor.

An accurate choice of the IDLE, BRIDGE and ACTION statuses is then performed, together with their logic presentation within a behaviour simulated by the reproduced human subject.

Like in a flow diagram, everything is studied, made, programmed according to a logic whose result is displaying a human being careful to give a series of "n" replies on "n" specific subjects in "n" languages or perform commands, everything with a "real" behaviour (Figurr 2). In such Figure, in step F1 IDLE 01, 02, 03 etc. are performed, while in F2 the question is listened to and in F3 the answer is analysed ("it is possible to reply?"). If the outcome is negative, in F4 an invitation is send to rephrase the question, while if it is positive, in F5 BRIDGE is performed and in F6 ACTION 01, 02, 03, ecc. are performed.

The "human" interface allows driving peripherals outside the optical reproduction system: domotic peripherals, DMX controlled lights systems for shows or events, the videoprojection of an audio-visual contribution on a large screen external to the system or any other electric or electronic apparatus equipped with standard communication protocols (for example USB, serial, parallel, Wifi, Bluetooth).

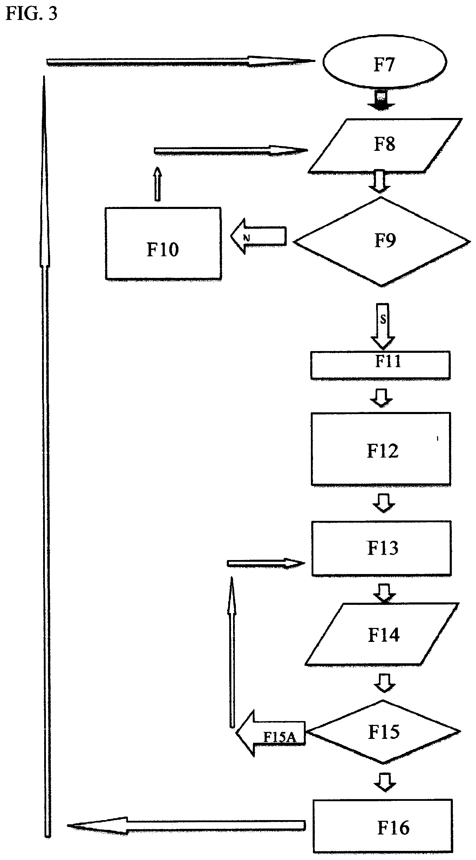

An inverse interactive situation can be provided, in which the interface, after having shown a certain subject required by the user, can also make questions to the user and analyse the answers to understand and communicate the user's degree of preparation (FIGURE 03). In such Figure, in step F7, IDLE 01, 02, 03 etc. are performed, while in F8 a subject is selected and in F9 the subject is analysed ("is it possible to go on?"). If the outcome is negative, in F10 an invitation is made to perform again the subject selection, while if it is positive, in F11 BRIDGE is performed and in F12 ACTION 01, 02, 03, ecc. are performed, related to the selected subject. Then, in F13 n questions are made on the selected subject, in F14 the answers are listened to, in F15 the answers themselves are analysed (for all n questions - F15A) and in F16 the evaluation is shown related to the analyses of the answers.

### SECOND STEP: IMAGE ACQUISITION

The process implies the acquisition of images by using a particular kinematographic technique described below.

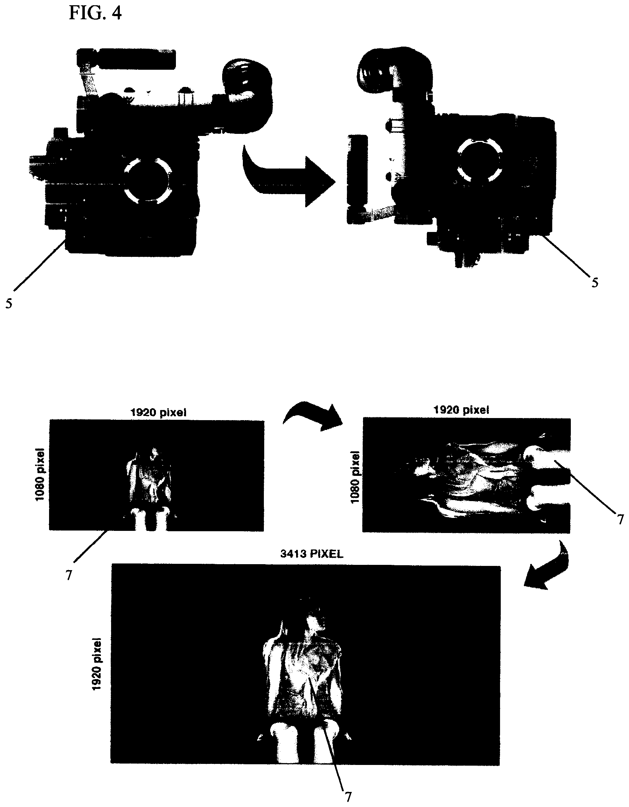

The subject 7 (aimed to become the protagonist of the interface described in this process) has to be shot with a high-definition digital shooting machine 5 with interlaced scanning in vertical, instead of horizontal, position (Figure 4).

The need for a vertical orientation stems from the fact that the subject 7 to be shot in the interface is a standing or sitting human being whose orientation is vertical.

All the shooting space is then developed in height and such arrangement of the shooting machine 5 allows acquiring images with a vertical resolution of at least 1920 pixel instead of 1080.

As result, there will be the perception of the general definition equal almost to twice with respect to a normal high definition FULL HD image (bottom of Figure 4).

In order to obtain the best realistic effect similar to the real visual perception, on the digital shooting machine 5 oscillating tilt and shift optics are assembled to obtain field depth according to the Scheimpflug rule or condition.

It states that, for an optical system, the focal plane generated by the objective and the one of the subject 7 meet on the same straight line.

As limit case, when the three planes are mutually parallel, they meet at infinite.

When the plane on which the subject 7 rests, the rear nodal plane and the focal plane meet in a single point, the full focusing of the subject 7 is obtained, independently from the used diaphragm.

Such wide field depth favours the visual perception of a three-dimensionality on the edges of the shot subject 7.

The herein described shooting technique assumes an illumination scheme with well defined contrasts.

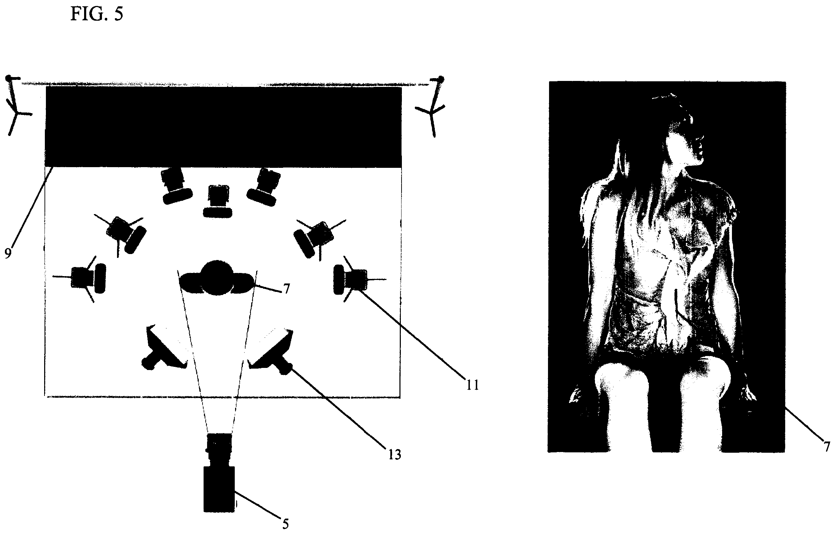

Figura 5 shows, on the right, the scheme in which the shooting machine 5 frames the subject 7 on a black background 9 through a projector 11 (preferably of the type with 500 W and Fresnel lens) and softbox 13 (preferably 1000 W).

The target is obtaining images of the subject 7 with widespread and uniform illumination on the front to obtain a general opacity of the subject 7 who otherwise will result transparent in the THIRD STEP (reproduction).

An illumination of well accurate side cuts and backlights will have to draw the subject 7 on his whole perimeter to increase the three-dimensionality effect and have well defined edges detached in the empty space (Figure 5).

The subject 7 will have to be in total absence of lighting in the areas surrounding his edge and thereby the effect called "edge cutting" will be obtained, necessary for reproducing the images described in the third step.

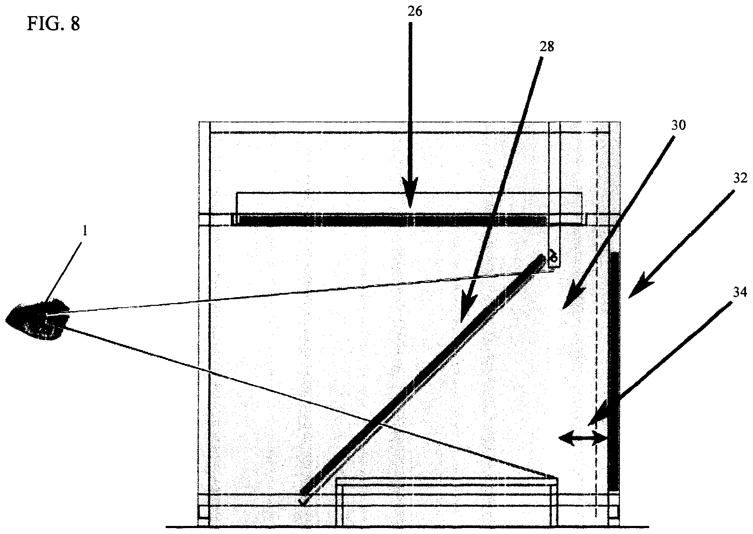

In the optical system, the image is projected by a LED monitor matrix 26 in a reverse vertical position on a plane made of transparent polycarbonate 28 placed at 45° with respect thereto (Figure 8).

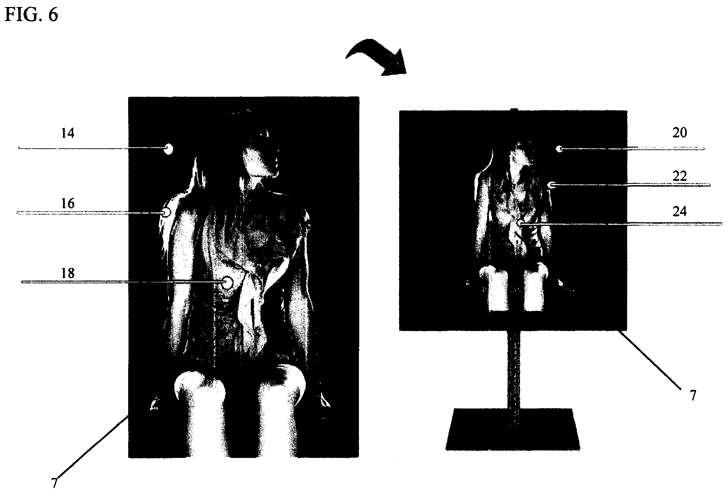

All the image portion not containing lightness is non reflecting and therefore transparent, obtaining the effect of suspension of the illuminated subject 7 in the empty space with a final "edge cutting" effect (Figure 6, in which on the right there is an image generated by a LED monitor matrix and on the left the same image reflected on transparent polycarbonate).

The strong contrast of the edges (area 16) and the special field depth obtained with the oscillating optics help obtaining in the reflection a strong detachment 22 of the subject 7 (with respect to the totally transparent area 20), while the widespread illumination 18 (with respect to the area with total lack of lightness 14) of the subject 7 is translated into an opacity 24 on its whole surface.

Particular care must be paid to perspective ratios and the accurate reproduction of the actual measures of the shot subject/object 7.

The "dummy pact" with the user 1, the perception of having a human being in front of you, is constrained to the condition that the images reproduced in the interface, through the optical system, should have the exact sizes of the shot subject 7.

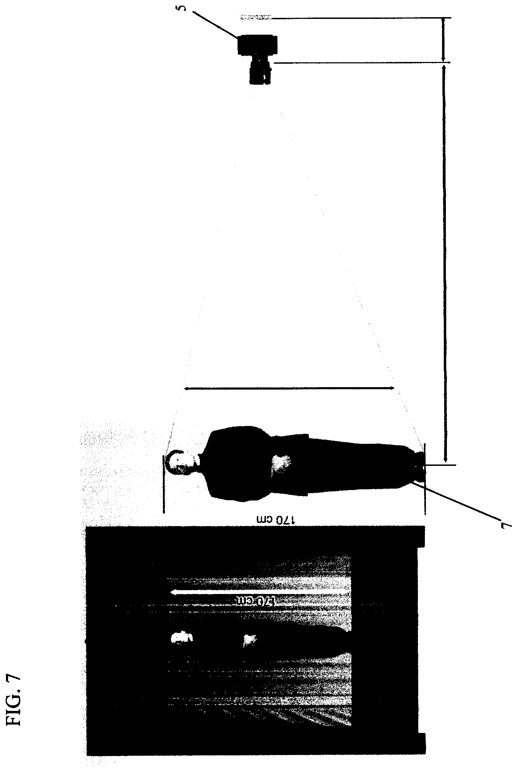

As can be seen in Figure 7, a person 170 cm tall in reality will have to be reproduced with an image exactly 170 cm tall.

The perspective of an average user 1 in front of the interface will have to comply with those of a look towards a human being placed in front of him.

In order to obtain the right perspective, the following parameters will have to be balanced: focus, shooting machine 5/subject 7 distance, view angle (Figure 7).

The status passages from IDLE (IDLE_01, IDLE_02, IDLE_03...IDLE_n) to PRE-IDLE (PREIDLE_01, PREIDLE_02, PREIDLE_03...PREIDLE_n), to BRIDGE, to ACTION (ACTIC)N_01, ACTION_02, ACTION_03...ACTION_n) are very delicate, and careful techniques for checking the shooting perspectives will have to be observed with the help of reference grids overlapped to the wiewfinder of the shooting machine 5.

In such a way, the shot subject 7 will have the same proportions in the various segments to be programmed and the related transitions will be homogeneous and will not interfere on the perception, by the user 1, of the action continuity by the subject 7 reproduced at the interface.

### THIRD STEP: REPRODUCTION

For the final reproduction of the process, an optical reproduction system is used, as described below and shown in Figure 8.

However, other displaying systems, some simpler (like a HD monitor), or other optical systems (suitable to reproduce the reality effect of the subject 7/interface) can be used as visual output of the interface described in this process.

The optical reproduction system allows, through the reflection of images generated by a LED monitor matrix 26 or other FULL HD source, having the optical illusion of the total suspension of an image in the empty space.

The reproduced images are reflected 28 on a slab made of transparent polycarbonate, 1 mm thick (thickness which guarantees the reduction to a minimum of the refraction of the two surfaces of the slab itself, preventing them from overlapping).

The final image perceived by the viewer is on a vertical plane 30 behind the polycarbonate slab, completely detached from the background 32, with which a strong parallax effect 34 is formed (Figure 8) .

Let us analyse, for example, the application of the process to the making of a "butler" interactive interface in a hotel suite.

Entering the suite, a three-dimensional image reproduced in the optical system (described in the THIRD STEP) is activated upon detecting the volumetric controller, which manages the signal through the dedicated software, giving rise to the reproduction of the programmed welcome segment, in order to then perform the action (associated with another specific programmed sequence) of exposing all comforts of the suite.

While it explains the operation of all elements of the suite (through a reproduction of the specific programmed segment), the related domotic peripherals will be enabled upon its command (tv, lights, curtains, taps...) through programmed commands sent with communication protocols (USB, serial port, parallel port, wifi, Bluetooth).

After having performed programmed sequence and related output commands, the interface will be put in IDLE status, waiting for voice or gesture commands from a user.

Every time, the commands will be performed and the butler will communicate the execution of commands verbally (replying with reference to requested information), physically (helping itself with gestures, particularly useful to be exploited by deaf users) and with the output towards external peripherals.

As regards the process which allows the interface operation for controlling the external peripherals, the idea is talking with an image which reproduces a human being (from a cinematography of a real uman being and not generated in computer graphics or animated) to allow controlling external peripherals.

The steps of such process are:
providing a reproduction (IDLE) of the human being in a standby status
detecting the presence of one or more users through an input of data provided by the volumetric sensor
in case of negative input, going back in a loop to the reproduction of the IDLE status
in caso of positive input, reproducing PREIDLE and ACTION with a request to make the control request of the peripheral (with the chance of showing a list of possible choices)
performing a verbal input by the user
performing a semantic analysis of the sentence and a logic comparison with the chance of executing updated commands by the peripheral
if the execution is not possible, reproducing ACTION with the request of inputting again a command on the peripheral
if the execution is not, visually executing BRIDGE and ACTION in which the interface describes and confirms the execution of the current command and going back to the initial IDLE status
simultaneously, providing an output through a suitable communication protocol with the peripheral, in which the peripheral is actuated and updated in its status.

## Claims

1. Process for making an audio-visual interface which reproduces a complete interactive human being as a chosen subject (7), the process , comprising the steps of:
- interactivity analysis;
- image acquisition; and
- reproduction, through an optical or television system with voice, gesture, logic interaction capabilities,
wherein the step of interactivity analysis comprises the sub-steps of: using an optical apparatus which reproduces with three-dimensional effect the human being, equipped with a sensor/controller (3) capable of performing a voice recognition, able to interpret the human language, the interpretation of the human language allowing to identify the information semantics; triggering the appropriate event depending on the received voice command, communicating with a computer through an interface to connect external devices; perceiving the presence, absence and related status change, and a series of movements by a viewer/user (1), and
wherein the chosen subject (7) recites all provided segments, namely ACTION, and a series of non-verbal actions, namely IDLE, PRE-IDLE and BRIDGE, which provide the interface with a presence effect due to the simulation of the human behavior during the dialogue, the visual sequences to shoot being segmented according to an interactivity logic to obtain a sensation of talking with a human being, the logic sequences being divided into four main categories: 1) IDLE sequence (indifference status in which the interface "lives" waiting for a status change command); 2) PRE-IDLE sequence (a behavior which occurs before the action); 3) BRIDGE sequence (an image transition which helps giving visual continuity to the interface between the IDLE/PRE-IDLE status and the ACTION status); and 4) ACTION sequence (in which the interface performs the action or makes the action performed),
wherein:
- the step of image acquisition provides for the use of a cinematographic technique comprising the sub-steps of: shooting the subject (7) with a high-definition digital shooting machine (5) with scanning interlaced in a vertical, instead of horizontal, position, on the digital shooting machine (5) oscillating tilt and shift optics being mounted to obtain field depth according to the Scheimpflug rule or condition, which states that, for an optical system, the focal plane generated by the objective and the focal plane of the subject (7) meet on the same straight line; obtaining images of the subject (7) with widespread and uniform illumination on the front to obtain a general opacity of the subject (7) and an illumination of well accurate side cuts and backlights to draw the subject (7) on its whole perimeter to increase the three-dimensionality effect and have well defined edges detached in an empty space, the subject (7) being under total absence of lighting in the areas surrounding his edge, thereby obtaining the "edge cutting" effect necessary for reproducing the images;
- the process further comprises the sub-steps of projecting the image from a LED monitor matrix (26) in a reverse vertical position on a plane made of transparent polycarbonate (28) placed at 45° with respect to the matrix (26);
- the step of reproduction comprises the sub-steps of: providing an optical reproduction system adapted, through the reflection of images generated by a LED monitor matrix (26) or other FULL HD source, to have the optical illusion of the total suspension of an image in an empty space; reflecting (28) the reproduced images on a slab made of transparent polycarbonate; providing a final image perceived by the viewer (1) on a vertical plane (30) behind the polycarbonate slab, completely detached from a background (32), with which a parallax effect (34) is formed; and
- the process comprises the step of activating the interface for controlling external peripherals outside the optical reproduction system, namely domotic peripherals, DMX controlled lights systems for shows or events, a videoprojection of an audio-visual contribution on an external large screen or any other electric or electronic apparatus equipped with standard communication protocols, comprising the steps of:
providing a reproduction (IDLE) of the human being in a standby status;
detecting the presence of one or more users through an input of data provided by the volumetric sensor;
in case of negative input, namely no users are present, going back in a loop to the reproduction of the IDLE status;
in case of positive input, namely users are present, reproducing the PREIDLE sequence and the ACTION sequence with a request to make a control request of the peripheral, possibly showing a list of possible choices;
performing a verbal input by the user;
performing a semantic analysis of the sentence and a logic comparison, possibly executing updated commands by the peripheral;
if the execution is not possible, reproducing the ACTION sequence with a request of inputting again a command on the peripheral;
if the execution is possible, visually executing the BRIDGE sequence and the ACTION sequence in which the interface describes and confirms the execution of the current command and going back to the initial IDLE status;
simultaneously, providing an output through a suitable communication protocol with the peripheral, in which the peripheral is actuated and updated in its status.

2. Process according to claim 1, adapted to manage communication protocols, for example WiFi and Bluetooth, towards various types of electric and electronic apparatuses.

3. Process according to claim 1, comprising displaying the human presence through a high-definition HD television signal.

4. Process according to claim 1, comprising displaying the human presence through any image reproduction system.

## Patentansprüche

1. Verfahren zur Herstellung einer audiovisuellen Schnittstelle, die einen vollständigen interaktiven Menschen als gewähltes Subjekt (7) reproduziert, wobei das Verfahren die folgenden Schritte umfasst:
- Interaktivitätsanalyse;
- Bildaufnahme; und
- Reproduktion über ein optisches oder Fernsehsystem mit Sprach-, Gesten- und logischen Interaktionsmöglichkeiten,
wobei der Schritt der Interaktivitätsanalyse die Unterschritte umfasst: Verwenden einer optischen Vorrichtung, die den Menschen mit dreidimensionaler Wirkung wiedergibt, ausgestattet mit einem Sensor/Controller (3), der eine Spracherkennung durchführen kann, der in der Lage ist, die menschliche Sprache zu interpretieren, die Interpretation der menschlichen Sprache, die es ermöglicht, die Informationssemantik zu identifizieren; Auslösen des entsprechenden Ereignisses in Abhängigkeit von dem empfangenen Sprachbefehl, Kommunizieren mit einem Computer über eine Schnittstelle, um externe Geräte anzuschließen; Wahrnehmen der Anwesenheit, Abwesenheit und damit verbundenen Statusänderung und einer Reihe von Bewegungen durch einen Betrachter/Benutzer (1), und
wobei das gewählte Subjekt (7) alle bereitgestellten Segmente, nämlich ACTION, und eine Reihe von nicht-verbalen Aktionen, nämlich IDLE, PRE-IDLE und BRIDGE, rezitiert, die der Schnittstelle aufgrund der Simulation des menschlichen Verhaltens währenddessen einen Präsenzeffekt verleihen der Dialog, die visuellen Sequenzen zum Aufnehmen werden gemäß einer Interaktivitätslogik segmentiert, um das Gefühl zu vermitteln, mit einem Menschen zu sprechen, wobei die logischen Sequenzen in vier Hauptkategorien unterteilt sind: 1) IDLE-Sequenz (Gleichgültigkeitsstatus, in dem die Schnittstelle "lebt" Warten auf einen Statusänderungsbefehl); 2) PRE-IDLE-Sequenz (ein Verhalten, das vor der Aktion auftritt); 3) BRIDGE-Sequenz (ein Bildübergang, der dabei hilft, der Schnittstelle zwischen dem IDLE/PRE-IDLE-Status und dem ACTION-Status eine visuelle Kontinuität zu verleihen); und 4) ACTION-Sequenz (in der die Schnittstelle die Aktion ausführt oder die Aktion ausführen lässt),
worin:
- der Schritt der Bilderfassung die Verwendung einer kinematografischen Technik vorsieht, die die folgenden Teilschritte umfasst: Aufnehmen des Objekts (7) mit einer hochauflösenden digitalen Aufnahmemaschine (5) mit verschachtelter Abtastung in einer vertikalen statt einer horizontalen Position, auf der digitalen Schießmaschine (5) ist eine oszillierende Tilt- und Shift-Optik montiert, um eine Schärfentiefe gemäß der Scheimpflug-Regel oder Bedingung zu erhalten, die besagt, dass sich bei einem optischen System die vom Objektiv erzeugte Fokusebene und die Fokusebene des Objekts (7) auf derselben Geraden treffen; Erhalten von Bildern des Objekts (7) mit weit verbreiteter und gleichmäßiger Beleuchtung auf der Vorderseite, um eine allgemeine Opazität des Objekts (7) zu erhalten, und einer Beleuchtung mit gut genauen Seitenschnitten und Hintergrundbeleuchtung, um das Objekt (7) auf seinem gesamten Umfang zu erhöhen den Dreidimensionalitätseffekt und gut definierte Kanten haben, die in einem leeren Raum abgelöst sind, wobei das Objekt (7) in den Bereichen, die seine Kante umgeben, vollständig ohne Beleuchtung ist, wodurch der "Kantenschneide"-Effekt erzielt wird, der zum Reproduzieren der Bilder erforderlich ist;
- das Verfahren umfasst ferner die Teilschritte des Projizierens des Bildes von einer LED-Monitormatrix (26) in einer umgekehrten vertikalen Position auf eine Ebene aus transparentem Polycarbonat (28), die in einem Winkel von 45° in Bezug auf die Matrix (26) angeordnet ist;
- der Schritt der Reproduktion umfasst die Unterschritte: Bereitstellen eines optischen Reproduktionssystems, das angepasst ist, durch die Reflexion von Bildern, die von einer LED-Monitormatrix (26) oder einer anderen FULL-HD-Quelle erzeugt werden, die optische Täuschung der Gesamtaufhängung von an Bild in einem leeren Raum; Reflektieren (28) der reproduzierten Bilder auf einer Platte aus transparentem Polycarbonat; Bereitstellen eines vom Betrachter (1) wahrgenommenen endgültigen Bildes auf einer vertikalen Ebene (30) hinter der Polycarbonatplatte, vollständig losgelöst von einem Hintergrund (32), mit dem ein Parallaxeneffekt (34) gebildet wird; und
- Das Verfahren umfasst den Schritt der Aktivierung der Schnittstelle zur Steuerung externer Peripheriegeräte außerhalb des optischen Wiedergabesystems, nämlich Domotik-Peripheriegeräte, DMX-gesteuerte Beleuchtungssysteme für Shows oder Veranstaltungen, eine Videoprojektion eines audiovisuellen Beitrags auf einem externen Großbildschirm oder eine andere elektrische oder elektronisches Gerät, das mit Standard-Kommunikationsprotokollen ausgestattet ist, umfassend die Schritte:
Bereitstellen einer Reproduktion (IDLE) des Menschen in einem Bereitschaftszustand;
Erfassen der Anwesenheit eines oder mehrerer Benutzer durch eine Eingabe von Daten, die von dem volumetrischen Sensor bereitgestellt werden;
bei negativer Eingabe, nämlich keine Benutzer vorhanden, Zurückgehen in einer Schleife zur Wiedergabe des IDLE-Zustands;
im Fall einer positiven Eingabe, nämlich wenn Benutzer anwesend sind, Wiedergeben der PREIDLE-Sequenz und der ACTION-Sequenz mit einer Aufforderung, eine Steuerungsanforderung an das Peripheriegerät zu stellen, wobei möglicherweise eine Liste möglicher Auswahlen angezeigt wird;
Durchführen einer verbalen Eingabe durch den Benutzer;
Durchführen einer semantischen Analyse des Satzes und eines logischen Vergleichs, möglicherweise Ausführen aktualisierter Befehle durch das Peripheriegerät;
wenn die Ausführung nicht möglich ist, Reproduzieren der ACTION-Sequenz mit einer Aufforderung zum erneuten Eingeben eines Befehls am Peripheriegerät;
wenn die Ausführung möglich ist, visuelles Ausführen der BRIDGE-Sequenz und der ACTION-Sequenz, in der die Schnittstelle die Ausführung des aktuellen Befehls beschreibt und bestätigt, und Rückkehr zum anfänglichen IDLE-Status;
gleichzeitig Bereitstellen einer Ausgabe durch ein geeignetes Kommunikationsprotokoll mit dem Peripheriegerät, in dem das Peripheriegerät aktiviert und in seinem Status aktualisiert wird.

2. Verfahren nach Anspruch 1, angepasst zur Verwaltung von Kommunikationsprotokollen, beispielsweise WiFi und Bluetooth, zu verschiedenen Arten von elektrischen und elektronischen Geräten.

3. Verfahren nach Anspruch 1, umfassend das Anzeigen der menschlichen Anwesenheit durch ein hochauflösendes HD-Fernsehsignal.

4. Verfahren nach Anspruch 1, umfassend das Anzeigen der menschlichen Anwesenheit durch ein beliebiges Bildwiedergabesystem.

## Revendications

1. Procédé de réalisation d'une interface audiovisuelle qui reproduit un être humain interactif complet en tant que sujet choisi (7), le procédé comprenant les étapes consistant à:
- analyse de l'interactivité;
- acquisition d'image; et
- la reproduction, par un système optique ou de télévision avec des capacités d'interaction vocale, gestuelle, logique,
dans lequel l'étape d'analyse d'interactivité comprend les sous-étapes consistant à: utiliser un appareil optique qui reproduit avec un effet tridimensionnel l'être humain, équipé d'un capteur/contrôleur (3) capable d'effectuer une reconnaissance vocale, capable d'interpréter le langage humain, l'interprétation du langage humain permettant d'identifier la sémantique de l'information; déclencher l'événement approprié en fonction de la commande vocale reçue, communiquer avec un ordinateur via une interface pour connecter des dispositifs externes; percevoir la présence, l'absence et le changement d'état associé, et une série de mouvements par un spectateur/utilisateur (1), et
dans lequel le sujet choisi (7) récite tous les segments fournis, à savoir ACTION, et une série d'actions non verbales, à savoir IDLE, PRE-IDLE et BRIDGE, qui fournissent à l'interface un effet de présence dû à la simulation du comportement humain pendant le dialogue, les séquences visuelles à tourner étant segmentées selon une logique d'interactivité pour obtenir une sensation de parler avec un être humain, les séquences logiques étant réparties en quatre grandes catégories: 1) séquence IDLE (état d'indifférence dans lequel l'interface "vit" en attente d'une commande de changement d'état); 2) séquence PRE-IDLE (un comportement qui se produit avant l'action); 3) Séquence BRIDGE (une transition d'image qui permet de donner une continuité visuelle à l'interface entre l'état IDLE/PRE-IDLE et l'état ACTION); et 4) séquence ACTION (dans laquelle l'interface exécute l'action ou fait exécuter l'action),
où:
- l'étape d'acquisition d'image prévoit l'utilisation d'une technique cinématographique comprenant les sous-étapes de: prise de vue du sujet (7) avec un appareil de prise de vue numérique haute définition (5) à balayage entrelacé en position verticale, au lieu d'horizontale, sur la machine de prise de vue numérique (5) des optiques d'inclinaison et de décalage oscillantes étant montées pour obtenir une profondeur de champ selon la règle ou la condition de Scheimpflug, qui stipule que, pour un système optique, le plan focal généré par l'objectif et le plan focal du sujet (7) se rejoignent sur une même droite; obtenir des images du sujet (7) avec un éclairage étendu et uniforme sur le devant pour obtenir une opacité générale du sujet (7) et un éclairage de coupes latérales et de contre-jours bien précis pour dessiner le sujet (7) sur tout son périmètre pour augmenter l'effet de tridimensionnalité et avoir des bords bien définis détachés dans un espace vide, le sujet (7) étant en absence totale d'éclairage dans les zones entourant son bord, obtenant ainsi l'effet «edge cutting» nécessaire à la reproduction des images;
- le procédé comprend en outre les sous-étapes de projection de l'image d'une matrice de moniteur LED (26) en position verticale inversée sur un plan en polycarbonate transparent (28) placé à 45° par rapport à la matrice (26);
- l'étape de reproduction comprend les sous-étapes consistant à: fournir un système de reproduction optique adapté, par la réflexion d'images générées par une matrice de moniteur LED (26) ou autre source FULL HD, à avoir l'illusion d'optique de la suspension totale d'un image dans un espace vide; réfléchir (28) les images reproduites sur une dalle en polycarbonate transparent; fournir une image finale perçue par le spectateur (1) sur un plan vertical (30) derrière la plaque de polycarbonate, complètement détachée d'un fond (32), avec lequel un effet de parallaxe (34) est formé; et
- le procédé comprend l'étape d'activer l'interface de commande de périphériques extérieurs au système de restitution optique, à savoir des périphériques domotiques, des systèmes d'éclairage commandés par DMX pour des spectacles ou des événements, une vidéoprojection d'une contribution audiovisuelle sur un grand écran extérieur ou tout autre appareil électrique ou appareil électronique équipé de protocoles de communication standards, comprenant les étapes consistant à:
fournir une reproduction (IDLE) de l'être humain dans un état d'attente;
détecter la présence d'un ou plusieurs utilisateurs grâce à une entrée de données fournies par le capteur volumétrique;
en cas d'entrée négative, c'est-à-dire qu'aucun utilisateur n'est présent, revenir en boucle à la reproduction de l'état IDLE;
en cas d'entrée positive, c'est-à-dire que des utilisateurs sont présents, reproduire la séquence PREIDLE et la séquence ACTION avec une requête pour effectuer une requête de contrôle du périphérique, montrant éventuellement une liste de choix possibles;
effectuer une saisie verbale par l'utilisateur;
effectuer une analyse sémantique de la phrase et une comparaison logique, éventuellement exécuter des commandes mises à jour par le périphérique;
si l'exécution n'est pas possible, reproduire la séquence ACTION avec une demande de saisie à nouveau d'une commande sur le périphérique;
si l'exécution est possible, exécuter visuellement la séquence BRIDGE et la séquence ACTION dans lesquelles l'interface décrit et confirme l'exécution de la commande en cours et revient à l'état IDLE initial;
simultanément, fournir une sortie via un protocole de communication approprié avec le périphérique, dans lequel le périphérique est activé et mis à jour dans son état.

2. Procédé selon la revendication 1, adapté à gérer des protocoles de communication, par exemple WiFi et Bluetooth, vers différents types d'appareils électriques et électroniques.

3. Procédé selon la revendication 1, **caractérisé en ce qu'**il consiste à afficher la présence humaine à travers un signal de télévision HD haute définition.

4. Procédé selon l'une des revendications 1 à 4, comprenant l'affichage de la présence humaine à travers tout système de reproduction d'images.
